# FASCICULE DE BREVET EUROPEEN

(11) **EP 1 860 748 B1**
(45) Date de publication et mention de la délivrance du brevet: **26.10.2011**
(21) Numéro de dépôt: 07290276.0
(22) Date de dépôt: 05.03.2007
(51) Int. Cl.: H02G 3/08

(54) **Appareillage électrique étanche à disposer en saillie ou à encastrer dans une paroi**
Teilbares elektrisches Gerät zur überstehenden Anordnung oder zum Einbau in eine Wand
Watertight electrical equipment to be disposed projecting or embedded in a wall

(30) Priorité: 22.05.2006 FR 0604546
(43) Date de publication de la demande: 28.11.2007
(73) Titulaire: Legrand France, 87000 Limoges (FR); Legrand SNC, 87045 Limoges (FR)
(72) Inventeur: Dumas, Eric, 87340 La Jonchere Saint Maurice (FR); Liboutet, Jean-Marc, 87280 Beaune les Mines (FR); Mullier, Daniel, 87380 Glanges (FR)
(74) Mandataire: Orsini, Fabienne

(56) Documents cités:
- CH-A- 526 711
- DE-A1- 19 903 316
- DE-U1- 9 110 236

## Description

La présente invention concerne de manière générale les appareillages électriques étanches tels que par exemple les interrupteurs, les va-et-vient et les prises de courant.

Elle concerne plus particulièrement un appareillage électrique étanche comportant un élément de montage d'au moins un mécanisme d'appareillage, un couvercle à rapporter sur l'avant dudit élément de montage et un joint d'étanchéité périphérique interposé entre ledit couvercle et ledit élément de montage.

### ARRIERE-PLAN TECHNOLOGIQUE

Actuellement, les appareillages électriques étanches sont majoritairement des appareillages à rapporter en saillie d'une paroi quelconque.

Ces appareillages électriques comprennent une boîte ouverte à l'avant, logeant le ou les mécanismes d'appareillage. Cette boîte est fermée par un enjoliveur donnant la fonction dudit appareillage électrique étanche. Cet enjoliveur porte une touche d'actionnement si l'appareillage électrique est un interrupteur ou un va-et-vient, ou présente un puit d'insertion d'une fiche si l'appareillage électrique est une prise de courant.

Pour assurer l'étanchéité entre la boîte et l'enjoliveur, un joint d'étanchéité est interposé entre le pourtour de leurs faces en contact. Les moyens de fixation de l'enjoliveur sur la boîte doivent alors être suffisamment robustes pour pouvoir comprimer le joint d'étanchéité afin que ce dernier assure correctement sa fonction.

Pour cela, ces moyens de fixation comprennent généralement des vis de fixation dont les corps filetés sont insérés au travers d'ouvertures de l'enjoliveur et vissés dans des alésages taraudés de cheminées de la boîte, et dont les têtes prennent appui contre l'enjoliveur.

Les moyens de fixation peuvent comprendre également des moyens d'encliquetage tels que des dents venant se loger dans des ouvertures correspondantes. Cependant, pour que ces moyens d'encliquetage assurent une compression suffisante du joint d'étanchéité, ils doivent être indémontables sans l'aide d'un outil inséré dans une ouverture d'accès.

Un tel dispositif est décrit dans le document DE-A-199 03 316.

L'inconvénient principal de tels moyens de fixation par vissage ou par encliquetage est qu'ils nécessitent le perçage d'ouvertures dans l'enjoliveur au travers desquelles peut s'infiltrer de l'humidité.

Ainsi, pour qu'un tel appareillage réponde au niveau d'étanchéité requis avec un indice de protection au moins égal à 55, il est nécessaire d'étanchéifier individuellement les ouvertures à l'aide de joints appropriés.

En outre, ce principe de fixation par vissage ou par encliquetage du couvercle (enjoliveur) sur la boîte (pour pose en saillie) ne peut être appliqué directement aux appareillages à encastrer compte tenu de l'absence dans les boîtes d'encastrement actuelles de formes identiques à celles des boîtes pour pose en saillie autorisant le vissage ou l'encliquetage du couvercle.

### OBJET DE L'INVENTION

Afin de remédier aux inconvénients précités de l'état de la technique, la présente invention propose un appareillage électrique étanche avec un indice de protection au moins égal à 55, de réalisation simple, fiable et peu coûteuse, et pouvant aussi bien être disposé en saillie qu'encastré dans une paroi.

Plus particulièrement, on propose selon l'invention un appareillage électrique étanche tel que défini dans l'introduction, dans lequel le couvercle comprend au moins deux pièces distinctes, à savoir, une plaque se présentant sous la forme d'un cadre qui porte des moyens d'encliquetage adaptés à coopérer de manière démontable sans outils avec des moyens d'encliquetage complémentaires dudit élément de montage, et au moins un enjoliveur définissant la fonction dudit appareillage électrique étanche, à rapporter dans chaque ouverture délimitée intérieurement par ladite plaque, chaque enjoliveur comprenant des pattes adaptées à s'insérer entre lesdits moyens d'encliquetage de la plaque et une partie dudit élément de montage pour, d'une part, verrouiller lesdits moyens d'encliquetage de la plaque sur les moyens d'encliquetage complémentaires de l'élément de montage, et, d'autre part, engendrer un effort de pression de la plaque sur l'élément de montage qui comprime ledit joint d'étanchéité.

Ainsi, avantageusement, dans l'appareillage électrique selon l'invention, le couvercle, comprenant la plaque et l'enjoliveur, est monté facilement de manière démontable sans outil sur l'élément de montage. En particulier, les moyens d'encliquetage démontables de la plaque, verrouillés par les pattes de l'enjoliveur, permettent à ladite plaque de compresser suffisamment le joint d'étanchéité entre la plaque et l'élément de montage pour assurer une bonne étanchéité.

Selon une première caractéristique avantageuse de l'appareillage électrique étanche conforme à l'invention, chaque enjoliveur porte latéralement ou en face avant des moyens de verrouillage coopérant avec la plaque pour verrouiller l'enjoliveur sur la plaque.

Ces moyens de verrouillage assurent le verrouillage de l'enjoliveur sur la plaque, et par là même, un verrouillage supplémentaire des moyens d'encliquetage de la plaque sur les moyens d'encliquetage complémentaires de l'élément de montage, ce qui maintient le joint d'étanchéité sous pression. Par ailleurs, la position de ces moyens de verrouillage évite à la face arrière de l'enjoliveur d'être traversée d'ouvertures pour l'insertion de vis de fixation ou d'outil. L'enjoliveur ne comprend ainsi aucune ouverture au travers de laquelle l'humidité peut passer.

Selon une autre caractéristique avantageuse de l'appareillage électrique étanche conforme à l'invention, les moyens de verrouillage comportent des clés quart-de-tour dont les têtes sont accessibles en face avant de l'enjoliveur et dont les pannetons sont adaptés à faire saillie des faces latérales de l'enjoliveur pour s'engager dans des logements latéraux de la plaque et prendre appui sur celle-ci.

Avantageusement, l'appareillage électrique étanche comporte au moins un autre joint d'étanchéité périphérique interposé entre chaque enjoliveur et ladite plaque.

Préférentiellement, la position et la forme des logements dans la plaque sont ajustées de sorte que ces logements sont adaptés à recevoir de manière étanche les pannetons des clés quart-de-tour de chaque enjoliveur pour que lesdits pannetons engendrent un autre effort de pression de l'enjoliveur sur la plaque qui comprime ledit autre joint d'étanchéité.

Avantageusement, la plaque comporte une gorge périphérique qui borde intérieurement chaque ouverture et qui reçoit chaque autre joint d'étanchéité.

Préférentiellement, chaque autre joint d'étanchéité est rapporté ou surmoulé sur l'enjoliveur correspondant.

Selon une autre caractéristique avantageuse de l'appareillage électrique étanche conforme à l'invention, les pattes de l'enjoliveur et les moyens d'encliquetage de la plaque présentent des surfaces de contact inclinées l'une par rapport à l'autre permettant, lorsqu'elles viennent au contact l'une de l'autre, d'une part, de pousser lesdits moyens d'encliquetage de la plaque vers les moyens d'encliquetage complémentaires de l'élément de montage de manière à les verrouiller ensemble, et, d'autre part, d'engendrer ledit effort de pression de la plaque sur l'élément de montage pour comprimer ledit joint d'étanchéité.

Bien entendu, en variante, on pourrait prévoir que ce soient les surfaces de contact des pattes de l'enjoliveur et de la partie rigide de l'élément de montage qui soient inclinées. Ces surfaces de contact engendreraient des efforts sensiblement identiques à ceux précédemment décrits et ayant les mêmes effets.

Préférentiellement, les moyens d'encliquetage de la plaque sont des griffes d'encliquetage présentant chacune une extrémité orientée à 135 degrés par rapport au corps droit de ladite griffe et adaptées à s'accrocher sur des nervures d'encliquetage présentant une pente de réception de même inclinaison, et lesdites surfaces de contact des moyens d'encliquetage sont prévues au dos des griffes d'encliquetage.

Ainsi, l'inclinaison des griffes et desdites nervures rend l'encliquetage non verrouillé désencliquetable par un simple effort de traction exercé sur la plaque.

D'autres caractéristiques avantageuses et non limitatives de l'appareillage électrique étanche selon l'invention sont les suivantes :
- lesdites surfaces de contact des pattes de l'enjoliveur s'étendent parallèlement au corps droit des griffes d'encliquetage et lesdites surfaces de contact des griffes d'encliquetage sont inclinées par rapport audit corps droit ;
- ledit joint d'étanchéité est rapporté ou surmoulé sur l'élément de montage;
- ledit joint d'étanchéité est rapporté ou surmoulé sur le cadre ; et
- la plaque et l'enjoliveur sont chacun formés d'une seule pièce par moulage d'une matière plastique.

Selon un premier mode de réalisation de l'appareillage électrique étanche conforme à l'invention, l'élément de montage est une boîte à rapporter en saillie sur une paroi.

Selon un autre mode de réalisation de l'appareillage électrique étanche conforme à l'invention, l'élément de montage est un support d'appareillage pour le montage encastré du mécanisme d'appareillage à l'intérieur d'une boîte d'encastrement.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique éclatée en perspective d'une boîte en saillie et d'une plaque d'un premier mode de réalisation d'un appareillage électrique étanche selon l'invention ;
- la figure 2 est une vue schématique éclatée en perspective de la boîte en saillie, de la plaque et d'un enjoliveur de l'appareillage électrique étanche de la figure 1 ;
- la figure 3 est une vue en coupe selon le plan A-A de la figure 1;
- les figures 4 et 5 sont des vues de détail en coupe selon le plan A-A et le plan A₁- A₁ de l'appareillage électrique étanche de la figure 2 assemblé ;
- la figure 6 est une vue schématique de face de l'enjoliveur de la figure 2 ;
- la figure 7 est une vue schématique en perspective éclatée et en coupe partielle d'un deuxième mode de réalisation de l'appareillage électrique étanche selon l'invention ;
- la figure 8 est une vue schématique éclatée en perspective d'un support d'appareillage et d'une plaque d'un troisième mode de réalisation de l'appareillage électrique étanche selon l'invention ;
- la figure 9 est une vue schématique éclatée en perspective du support d'appareillage, de la plaque et d'un enjoliveur de l'appareillage électrique étanche de la figure 8 ; et
- la figure 10 est une vue en coupe selon le plan B-B de la figure 9.

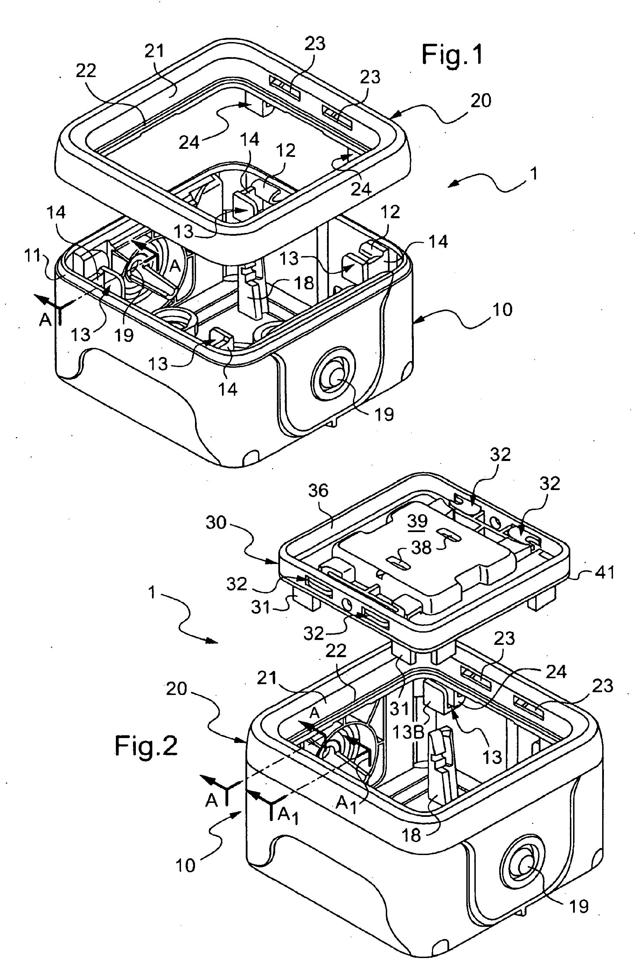

Sur les figures 1 à 6, on a représenté un premier mode de réalisation d'un appareillage électrique 1 étanche comprenant un élément de montage formé par une boîte 10 à disposer en saillie sur une paroi quelconque (mur ou cloison), et un couvercle comportant deux pièces distinctes, à savoir, une plaque 20 en forme de cadre ajustable sur la face avant de la boîte 10, et un enjoliveur 30 destiné à fermer une ouverture 21 centrale délimitée intérieurement par la plaque 20.

Ici, l'appareillage électrique 1 étanche est un interrupteur, mais il pourrait être un va-et-vient, une prise de courant, un poussoir coup-de-poing d'arrêt d'urgence, un thermostat ou encore un voyant lumineux.

Comme le montrent les figures 1 et 2, la boîte 10 de l'appareillage électrique 1 est de forme parallélépipédique, elle présente quatre parois latérales qui bordent une paroi de fond carrée. Deux de ses parois latérales en vis-à-vis comportent des entrées de câbles 19 obturées par des opercules défonçables. La paroi de fond de la boîte 10 porte quant à elle des moyens de montage d'un socle du mécanisme d'appareillage (non représenté), formés ici par des montants 18 orientés vers la face avant de la boîte 10.

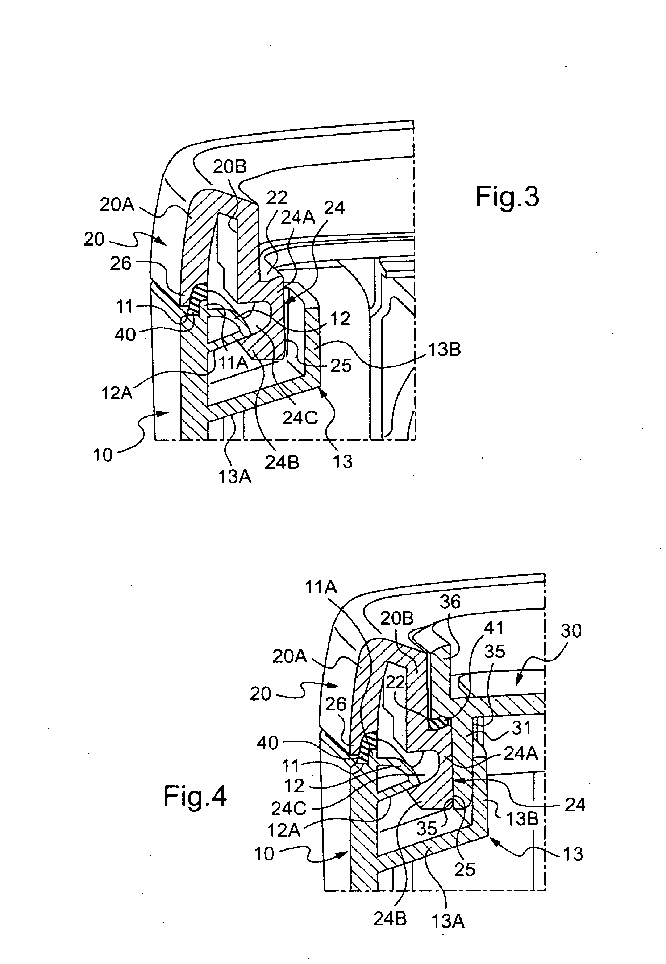

La face avant de cette boîte 10 est complètement ouverte. Elle est délimitée par un bord périphérique 11 (formé par la tranche des bords libres des parois latérales de la boîte 10) qui présente un décrochement formant, le long du bord périphérique 11, une nervure 11A en saillie (figure 3).

Comme le montrent les figures 1, 3 et 4, la plaque 20 présente une forme de cadre dont les quatre bords délimitent intérieurement une ouverture 21 centrale. Cette plaque 20 est formée par moulage d'une seule pièce en matière plastique. Ses quatre bords présentent une même section globalement en forme de U.

L'une des branches du U, la branche intérieure 20B qui longe l'ouverture 21 centrale de la plaque 20, forme à son extrémité une gorge périphérique 22 qui borde intérieurement l'ouverture 21 centrale. Cette gorge périphérique 22 loge un joint d'étanchéité 41 disposé entre la plaque 20 et l'enjoliveur 30 (voir figure 4). Ce joint d'étanchéité 41 peut être surmoulé sur la face arrière de l'enjoliveur 30 ou simplement rapporté dans la gorge.

La tranche de l'autre branche du U, la branche extérieure 20A est destinée à venir s'appliquer contre le bord périphérique 11 de la boîte 10. Elle présente un décrochement qui forme une nervure 26 en saillie complémentaire de la nervure 11A du bord périphérique 11 de la boîte 10, de sorte que la plaque 20 peut s'emboîter sur la boîte 10.

Un joint d'étanchéité 40 périphérique est disposé entre la plaque 20 et la boîte 10. Plus particulièrement, le joint d'étanchéité 40 est logé entre la tranche de la branche extérieure 20A de la plaque 20 et le bord périphérique 11 de la boîte 10.

Le joint d'étanchéité peut être surmoulé ou rapporté soit le long de la tranche de la branche extérieure 20A de la plaque 20, soit le long du bord périphérique 11 de la boîte 10.

Selon une caractéristique avantageuse de l'invention, la plaque 20 porte des moyens d'encliquetage 24 adaptés à coopérer de manière démontable sans outils avec des moyens d'encliquetage 12 complémentaires de la boîte 10.

Plus précisément, comme le montrent les figures 1 et 3, la plaque 20 comportent deux paires de griffes d'encliquetage 24 disposées en dos-à-dos sur deux bords opposés de son ouverture 21 centrale.

Chaque griffe d'encliquetage 24 présente un corps droit 24A qui s'étend depuis la tranche de la branche intérieure 20B de la plaque 20 dans le prolongement de ladite branche vers la paroi de fond de la boîte 10, et une extrémité 24B orientée vers la branche extérieure 20A de la plaque 20. L'extrémité 24B de chaque griffe d'encliquetage 24 présente une face supérieure 24C plane, celle tournée vers la face avant de l'appareillage électrique 1 étanche, qui est inclinée d'un angle supérieur à 90 degrés par rapport à la direction selon laquelle s'étend le corps droit 24A, ici égal à environ 135 degrés.

En outre, deux parois latérales opposées de la boîte 10 destinées à être disposées en regard des griffes d'encliquetage 24 de la plaque 20 portent des nervures d'encliquetage 12 formant lesdits moyens d'encliquetage complémentaires. Les nervures d'encliquetage 12 présentent des longueurs égales aux largeurs des griffes d'encliquetage 24. Ces nervures d'encliquetage 12 présentent des faces inférieures 12A tournées vers la paroi de fond de la boîte 10 sur lesquelles sont destinées à s'accrocher lesdites extrémités 24B des griffes d'encliquetage 24. Chaque face inférieure 12A est une surface plane inclinée d'un angle d'environ 135 degrés par rapport à la paroi de la boîte qui porte la nervure d'encliquetage 12 correspondante de sorte que les faces supérieures 24C des extrémités 24B des griffes d'encliquetage 24 puissent glisser à plat sur lesdits faces inférieures 12A des nervures d'encliquetage 12 (voir figures 3 et 4).

Comme le montrent plus particulièrement les figures 1, 3 et 4, les parois latérales opposées de la boîte 10 portent en dessous de chaque nervure d'encliquetage 12 une paroi en L 13 dont la grande longueur 13A s'étend parallèlement à la paroi de fond de la boîte 10 et dont la petite longueur 13B se relève vers la face avant de la boîte 10 en regard de la nervure d'encliquetage 12 correspondante.

Un logement de passage pour une des griffes d'encliquetage 24 est défini entre la petite longueur 13B de chaque paroi en L 13 et la nervure d'encliquetage 12 correspondante (voir figure 3).

En outre, chaque paroi en L 13 est renforcée par une paroi de renfort 14 qui s'étend entre un des bords de ladite paroi en L 13 et la paroi latérale de la boîte 10 qui la porte (voir figure 1).

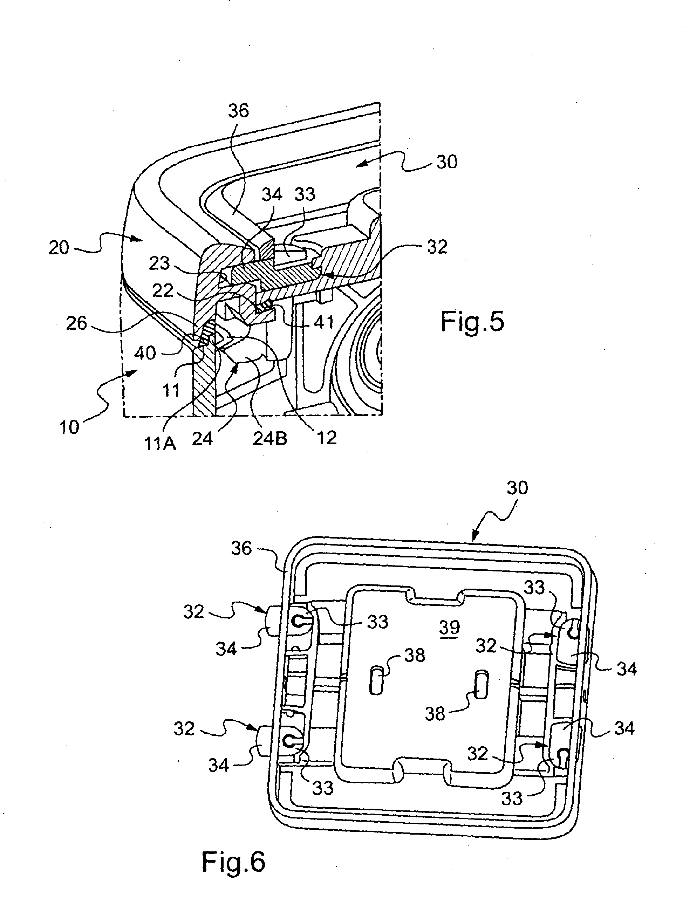

Comme le montrent plus particulièrement les figures 2 et 6, l'enjoliveur 30 se présente ici sous la forme d'un cadre rigide dont les quatre bords définissent une ouverture centrale obturée par une membrane d'étanchéité 39. Cette membrane d'étanchéité 39 est ici percée de deux orifices 38 pour le passage de deux pattes d'une touche de commande (non représentée) adaptée à se monter sur un basculeur du mécanisme d'interrupteur (non représenté). La face arrière de l'enjoliveur 30 est, aux orifices 38 près, majoritairement fermée sur sa surface.

L'enjoliveur 30 est ici formé par moulage d'une seule pièce en matière plastique, la membrane d'étanchéité 39 étant formée d'une seule pièce avec l'enjoliveur.

L'enjoliveur 30 comporte en face avant un rebord périphérique 36 qui, lors de la mise en place de l'enjoliveur 30 sur la boîte 10, vient se placer contre la face externe (tournée vers l'ouverture 21 centrale) de la branche intérieure 20B de la plaque 20 (voir figure 4).

En outre, comme le montrent les figures 2 et 4, l'enjoliveur 30 porte sur sa face arrière, à proximité de son rebord périphérique 36, des pattes 31 qui s'étendent perpendiculairement au plan de l'enjoliveur.

Ces pattes 31 de faible épaisseur présentent une largeur sensiblement égale à la longueur des nervures d'encliquetage 12 de la boîte 10. Elles sont adaptées à s'insérer entre lesdits moyens d'encliquetage 24 de la plaque 20 et une partie 13 de l'élément de montage 10 de l'appareillage électrique 1 pour, d'une part, verrouiller lesdits moyens d'encliquetage 24 de la plaque 20 sur les moyens d'encliquetage 12 complémentaires de l'élément de montage 10 et, d'autre part, engendrer un effort de pression de la plaque 20 sur l'élément de montage 10 qui comprime ledit joint d'étanchéité 40.

Plus particulièrement, lorsque l'enjoliveur 30 est mis en place dans l'ouverture 21 centrale de la plaque 20 encliquetée par ses griffes d'encliquetage 24 sur les nervure d'encliquetage 12 de la boîte 10, les pattes 31 de l'enjoliveur 30 s'insèrent dans lesdits logements de passage définis entre les parois en L 13 et les nervures d'encliquetage 12 de la boîte 10 pour se coincer entre les griffes d'encliquetage 24 de la plaque 20 et les petites longueurs 13B relevées desdites parois en L 13 (voir figure 4).

Avantageusement, les pattes 31 de l'enjoliveur 30 et les griffes d'encliquetage 24 de la plaque 20 en vis-à-vis présentent des surfaces de contact inclinées les unes par rapport aux autres.

Ici, comme le montre la figure 4, chaque patte 31 présente des faces 35 sensiblement droites (à l'angle de démoulage près) parallèles à la paroi latérale en vis-à-vis de la boîte 10. En revanche, le dos du corps droit 24A de chaque griffe d'encliquetage 24 présente une surface de contact 25, destinée à venir au contact d'une face 35 d'une des pattes 31 de l'enjoliveur 30, qui est inclinée par rapport à la paroi latérale en vis-à-vis de la boîte 10.

Ainsi, lorsque chaque patte 31 de l'enjoliveur 30 s'insère entre la griffe d'encliquetage 24 et la petite longueur 13B relevée de la paroi en L correspondante, elle pousse la griffe d'encliquetage 24 vers la nervure d'encliquetage 12 si bien que la face supérieure 24C plane inclinée à 135 degrés de ladite griffe glisse sur la face inférieure 12A plane de ladite nervure. Ce glissement a pour premier effet d'assembler solidement la plaque 20 avec la boîte 10 en verrouillant leurs moyens d'encliquetage 24,12 respectifs. Par ailleurs, les faces de glissement de ces moyens d'encliquetage 24,12 étant inclinées par rapport à la paroi de fond de la boîte 10, ce glissement a pour second effet de pousser la plaque 20 vers le fond de la boîte 10 en comprimant le joint d'étanchéité 40.

Comme le montrent les figures 2, 5 et 6, l'enjoliveur 30 porte latéralement et en face avant des moyens de verrouillage 32 coopérant avec la plaque 20 pour verrouiller l'enjoliveur 30 sur la plaque 20.

Plus particulièrement, ces moyens de verrouillage comportent quatre clés quart-de-tour 32 disposées par paire sur deux côtés opposés de l'enjoliveur 30. Chaque clé quart-de-tour 32 est logée dans l'enjoliveur 30 et est adaptée à être pivotée (à l'aide d'un tournevis) d'un quart de tour dans le plan de l'enjoliveur 30 (autour d'un axe normal à la face avant de l'enjoliveur) pour positionner son panneton 34 en saillie de la face latérale de l'enjoliveur (voir figure 6). Chaque clé quart-de-tour 32 comporte une tête 33 de manoeuvre accessible en face avant de l'enjoliveur 30. Le rebord périphérique 36 de l'enjoliveur 30 comporte au niveau de chaque clé quart-de-tour 32 une fenêtre au travers de laquelle le panneton 34 de ladite clé fait saillie vers l'extérieur de son logement (voir figures 5 et 6).

La plaque 20 comprend en correspondance des clés quart-de-tour 32 des logements 23destinés à accueillir les pannetons 34 desdites clés 32 qui font saillie au travers des fenêtres du rebord périphérique 36 de l'enjoliveur 30.

Ces logements 23 ne sont ouverts que du côté de l'ouverture 21 centrale de la plaque 20, de sorte que l'humidité qui pourrait éventuellement s'infiltrer dedans ne puisse pas entrer à l'intérieur de la boîte 10.

Préférentiellement, la position de ces logements 23 est ajustée en hauteur par rapport à la gorge périphérique 22 de sorte qu'il est nécessaire, pour que les pannetons 34 des clés quart-de-tour 32 puissent s'introduire dans ces logements 23, d'exercer un important effort de pression de l'enjoliveur 30 sur la plaque 20.

Ainsi, lorsque les panetons 34 sont insérés dans ces logements 23, le joint d'étanchéité 41 placé dans la gorge périphérique 22 est correctement comprimé entre la face arrière de l'enjoliveur 30 et la plaque 20, de sorte qu'aucune particule liquide ne peut s'infiltrer entre eux.

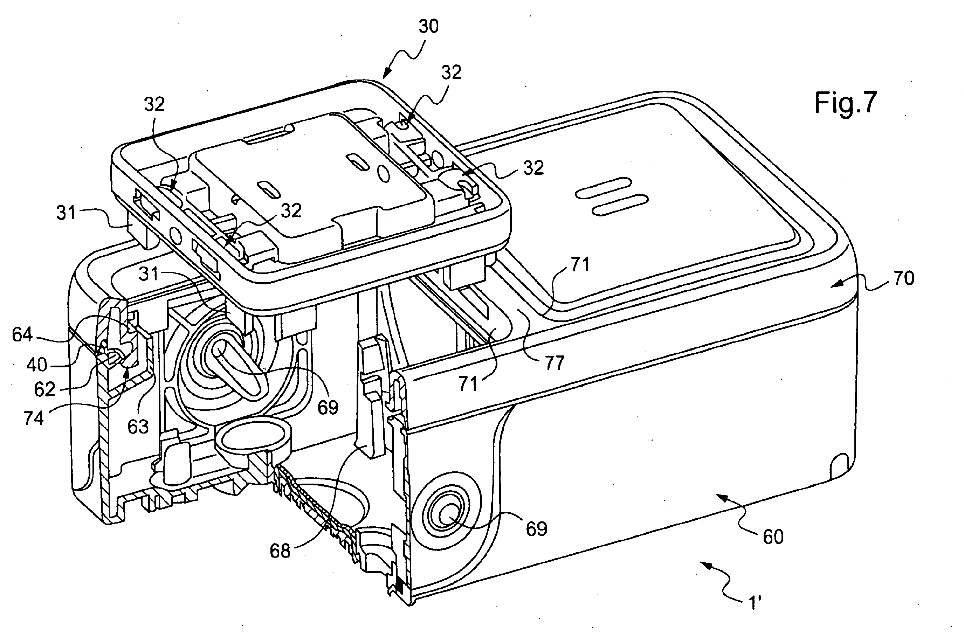

Sur la figure 7, on a représenté un deuxième mode de réalisation de l'appareillage électrique 1' étanche comprenant un élément de montage formé par une boîte 60 à disposer en saillie sur une paroi, et un couvercle comportant ici trois pièces distinctes, à savoir une plaque 70 et deux enjoliveurs 30 rapportés dans deux ouvertures 71 de la plaque 70.

Selon ce mode de réalisation, la boîte 60 de l'appareillage électrique 1' peut accueillir deux mécanismes d'appareillage (non représentés) identiques ou différents.

La boîte 60 est parallélépipédique et comporte quatre parois latérales qui bordent une paroi de fond rectangulaire. Ses deux grandes parois latérales présentent des entrées de câbles 69 obturées par des opercules défonçables. La paroi de fond de la boîte 60 comporte quant à elle des moyens de montage de chacun des socles des deux mécanismes d'appareillage, formés ici par des montants 68 orientés vers la face avant de la boîte 60.

La face avant de cette boîte 60 est complètement ouverte et est délimitée par un bord périphérique.

Les faces intérieures des parois latérales de la boîte 60 supportent des nervures d'encliquetage 62 et des parois en L 63 identiques aux nervures d'encliquetage 12 et aux parois en L 13 de la boîte 10 précédemment décrite.

La plaque 70 se présente sous la forme d'un cadre dont l'ouverture centrale rectangulaire est séparée en deux ouvertures 71 carrées identiques par une traverse 77. Les quatre bords et la traverse 77 de la plaque 70 présentent des sections en forme de U semblables à la section des bords de la plaque 20 précédemment décrite, si bien que, d'une part, chacune des deux ouvertures 71 de la plaque 70 est bordée par une gorge périphérique 64 et, d'autre part, la plaque 70 est adaptée à s'emboîter sur le bord périphérique de la boîte 60.

La plaque 70 est également réalisée d'une seule pièce par moulage d'une matière plastique.

Un joint d'étanchéité 40 périphérique est disposé entre la tranche périphérique de la plaque 70 et le bord périphérique de la boîte 60.

La plaque 70 porte en face arrière, sur chacun de ses côtés périphériques, des griffes d'encliquetage 74 en saillies adaptées à coopérer de manière démontable sans outils avec les nervures d'encliquetage 62 de la boîte 60.

Chaque enjoliveur 30, à rapporter dans une ouverture 71 de la plaque 70, est identique à celui précédemment décrit et ne sera donc pas décrit une nouvelle fois.

Ses pattes 31 sont adaptées à s'insérer dans les logements de passage définis entre les petites longueurs des parois en L 63 et les nervures d'encliquetage 62 de la boîte 60 pour se coincer entre les griffes d'encliquetage 74 de la plaque 70 accrochées sur les nervures d'encliquetage 62 et lesdites parois en L 63 de manière à verrouiller lesdites griffes d'encliquetage 74 sur les nervures d'encliquetage 62, et à exercer un effort comprimant le joint d'étanchéité 40 disposé entre la plaque 70 et la boîte 60.

D'autres joints d'étanchéité (non représentés) sont disposés dans les gorges périphériques 64 longeant lesdites ouvertures 71 et interposés entre la face arrière des enjoliveurs 30 et la plaque 70. Ils sont destinés à être comprimés lorsque les pannetons des clés quart-de-tour 32 des enjoliveurs 30 s'insèrent dans les logements correspondants de la plaque 70 (comme cela a déjà été décrit dans le détail en référence aux figures 4 à 6).

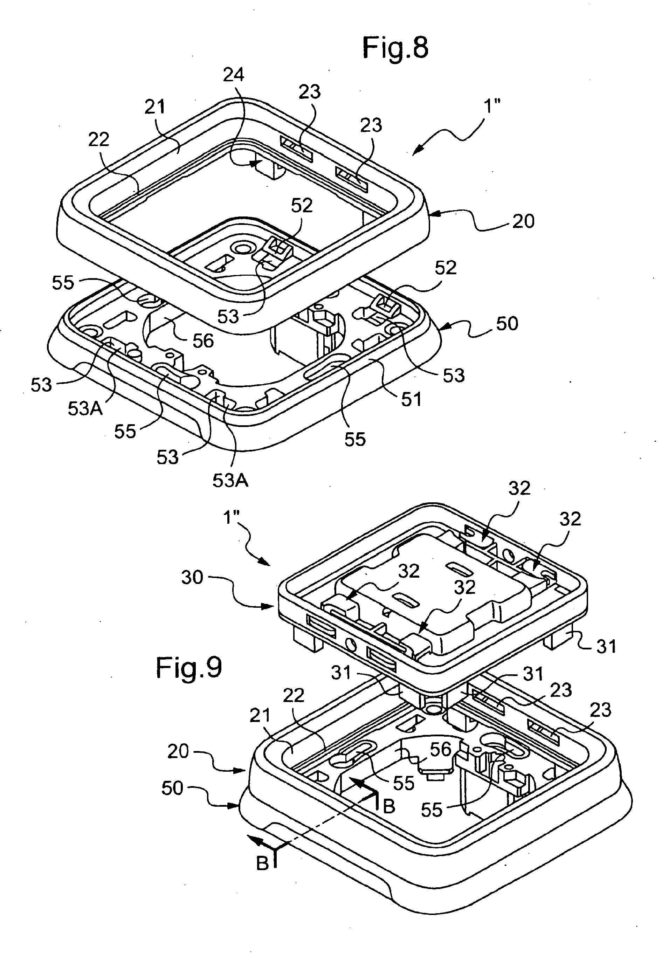

Sur les figures 8 à 10, on a représenté un troisième mode de réalisation de l'appareillage électrique 1" étanche comprenant un élément de montage formé par un support d'appareillage 50 à disposer en saillie sur une paroi pour le montage d'un mécanisme d'appareillage (non représenté) à l'intérieur d'une boîte d'encastrement (non représentée) encastrée dans une paroi. Le support d'appareillage 50 est fermé par un couvercle qui comprend la plaque 20 et l'enjoliveur 30 décrits en référence aux figures 1 à 6 relatives au premier mode de réalisation de l'invention.

Comme le montrent les figures 8 et 9, le support d'appareillage 50 se présente sous la forme d'un cadre plan délimitant intérieurement une ouverture centrale 56 adaptée à recevoir le mécanisme d'appareillage (non représenté) qui s'accroche par encliquetage sur les bords de ladite ouverture centrale.

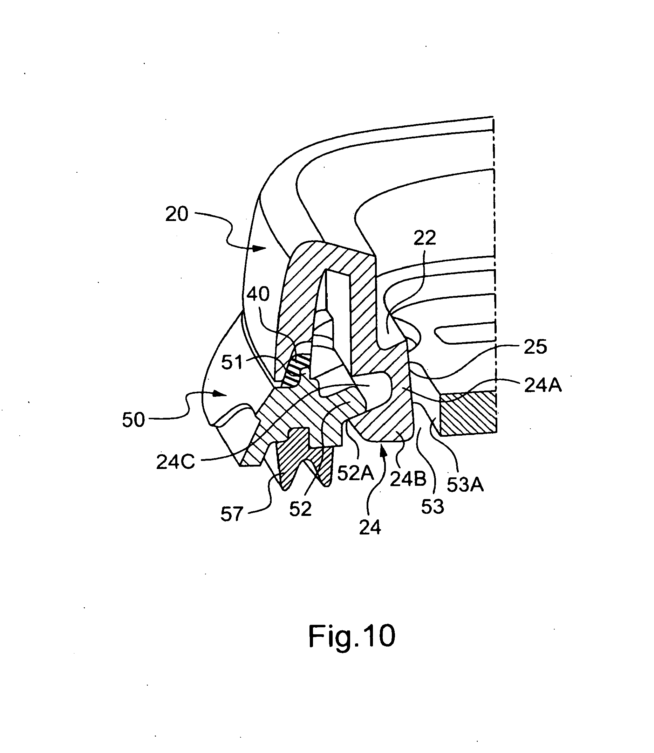

Comme le montre la figure 10, la face arrière du support d'appareillage 50 est pourvue d'un joint périphérique 57 à double lèvres destiné à s'appliquer contre la paroi, autour de l'ouverture pratiquée dans cette dernière.

Le support d'appareillage 50 comporte sur ses quatre côtés quatre ouvertures traversantes 55 en forme de trou de serrure pour sa fixation à la boîte d'encastrement au moyen de vis de fixation vissée dans des cheminées de ladite boîte d'encastrement.

La face avant du support d'appareillage 50 est bordée par une nervure 51 sur laquelle vient s'emboîter la plaque 20.

Comme le montrent plus particulièrement les figures 8 et 10, le support d'appareillage 50 comporte sur deux côtés opposés, au dos de la nervure 51, deux paires de nervures d'encliquetage 52 sur lesquelles sont destinées à s'accrocher les griffes d'encliquetage 24 de la plaque 20.

Un joint d'étanchéité 40 périphérique est disposé entre la plaque 20 et le support d'appareillage 50. Ce joint d'étanchéité 40 est logé entre la tranche de la branche extérieure 20A de la plaque 20 et le bord périphérique du support d'appareillage 50. Le joint d'étanchéité 40 peut être surmoulé ou rapporté soit le long de la tranche de la branche extérieure 20A de la plaque 20, soit le long du bord périphérique du support d'appareillage 50.

Les nervures d'encliquetage 52 du support d'appareillage 50 présentent des longueurs égales aux largeurs des griffes d'encliquetage 24. Ces nervures d'encliquetage 52 présentent des faces inférieures 52A planes inclinées sur lesquelles sont destinées à s'accrocher lesdites extrémités 24B des griffes d'encliquetage 24. L'inclinaison de la face inférieure 52A de chaque nervure d'encliquetage 52 est d'environ 135 degrés par rapport à la paroi du support d'appareillage qui porte la nervure d'encliquetage 52 correspondante de sorte que les faces supérieures 24C inclinées des extrémités 24B des griffes d'encliquetage 24 puissent glisser à plat sur lesdits faces inférieures 52A des nervures d'encliquetage 52.

Le support d'appareillage 50 présente par ailleurs, en regard de chacune de ses nervures d'encliquetage 52, une ouverture 53 définissant avec la nervure d'encliquetage 52 un logement de passage d'une griffe d'encliquetage 24 de la plaque 20. Chaque ouverture 53 présente une largeur calibrée et une longueur égale à la longueur des nervures d'encliquetage 52. Cette largeur calibrée est telle que, lors de la mise en place de l'enjoliveur 30 dans l'ouverture 21 de la plaque 20, chaque patte 31 de l'enjoliveur 30 prend appui, d'un côté, contre le fond 53A de l'ouverture 53, et, de l'autre côté, contre la surface de contact 25 d'une des griffes d'encliquetage 24 de la plaque 20 de manière à verrouiller ces griffes sur les nervures d'encliquetage 52 du support d'appareillage 50, et à exercer un effort de pression comprimant le joint d'étanchéité 40.

Le verrouillage de l'enjoliveur 30 sur la plaque 20 est réalisé au moyen des clés quart-de-tour 32 engagées dans les logements 23 correspondants de la plaque 20 comme cela a été décrit dans le détail précédemment.

L'étanchéité entre l'enjoliveur 30 et la plaque 20 est assurée, comme dans le premier mode de réalisation représenté sur les figures 1 à 6, par un joint d'étanchéité périphérique logé dans la gorge périphérique 22 de la plaque 20 et comprimé entre cette dernière et ledit enjoliveur 30 verrouillé sur celle-ci.

La présente invention n'est nullement limitée aux modes de réalisation décrits et représentés, mais l'homme du métier saura y apporter toute variante conforme à son esprit.

## Revendications

1. Appareillage électrique (1) étanche comportant un élément de montage (10 ; 50 ; 60) d'au moins un mécanisme d'appareillage, un couvercle (20, 30 ; 70) à rapporter sur l'avant dudit élément de montage (10 ; 50 ; 60) et un joint d'étanchéité (40) périphérique interposé entre ledit couvercle (20, 30 ; 70) et ledit élément de montage (10 ; 50 ; 60), le couvercle (20,30 ;70) comprenant une plaque (20 ; 70) se présentant sous la forme d'un cadre qui porte des moyens d'encliquetage (24 ; 74) adaptés à coopérer de manière démontable sans outils avec des moyens d'encliquetage (12 ; 52 ; 62) complémentaires dudit élément de montage (10 ; 50 ; 60), **caractérisé en ce que** le couvercle (20, 30 ; 70) comprend au moins deux pièces distinctes dont au moins un enjoliveur (30) définissant la fonction dudit appareillage électrique (1) étanche, à rapporter dans chaque ouverture (21) délimitée intérieurement par ladite plaque (20 ; 70), chaque enjoliveur (30) comprenant des pattes (31) adaptées à s'insérer entre lesdits moyens d'encliquetage (24 ; 74) de la plaque (20 ; 70) et une partie (13B ; 53A ; 63) dudit élément de montage (10 ; 50 ; 60) pour, d'une part, verrouiller lesdits moyens d'encliquetage (24) de la plaque (20 ; 70) sur les moyens d'encliquetage (12 ; 52 ; 62) complémentaires de l'élément de montage (10 ; 50 ; 60), et, d'autre part, engendrer un effort de pression de la plaque (20 ; 70) sur l'élément de montage (10 ; 50 ; 60) qui comprime ledit joint d'étanchéité (40).

2. Appareillage électrique (1) étanche selon la revendication précédente, **caractérisé en ce que** chaque enjoliveur (30) porte latéralement ou en face avant des moyens de verrouillage (32) coopérant avec la plaque (20 ; 70) pour verrouiller l'enjoliveur (30) sur la plaque (20 ; 70).

3. Appareillage électrique (1) étanche selon la revendication précédente, **caractérisé en ce que** les moyens de verrouillage comportent des clés quart-de-tour (32) dont les têtes (33) sont accessibles en face avant de l'enjoliveur (30) et dont les pannetons (34) sont adaptés à faire saillie des faces latérales de l'enjoliveur (30) pour s'engager dans des logements (23) latéraux de la plaque (20 ; 70) et prendre appui sur celle-ci.

4. Appareillage électrique (1) étanche selon l'une des revendications précédentes, **caractérisé en ce qu'**il comporte au moins un autre joint d'étanchéité (41) périphérique interposé entre chaque enjoliveur (30) et ladite plaque (20 ; 70).

5. Appareillage électrique (1) étanche selon les deux revendications précédentes, **caractérisé en ce que** la position et la forme des logements (23) dans la plaque (20 ; 70) sont ajustées de sorte que ces logements (23) sont adaptés à recevoir de manière étanche les pannetons (34) des clés quart-de-tour (32) de chaque enjoliveur (30) pour que lesdits pannetons (34) engendrent un autre effort de pression de l'enjoliveur (30) sur la plaque (20 ; 70) qui comprime ledit autre joint d'étanchéité (41).

6. Appareillage électrique (1) étanche selon l'une des deux revendications précédentes, **caractérisé en ce que** la plaque (20 ; 70) comporte une gorge périphérique (22) qui borde intérieurement chaque ouverture (21) et qui reçoit chaque autre joint d'étanchéité (41).

7. Appareillage électrique (1) étanche selon l'une des trois revendications précédentes, **caractérisé en ce que** chaque autre joint d'étanchéité (41) est rapporté ou surmoulé sur l'enjoliveur (30) correspondant.

8. Appareillage électrique (1) étanche selon l'une des revendications précédentes, **caractérisé en ce que** les pattes (31) de l'enjoliveur (30) et les moyens d'encliquetage (24) de la plaque (20 ; 70) présentent des surfaces de contact (35, 25 ; 75) inclinées l'une par rapport à l'autre permettant, lorsqu'elles viennent au contact l'une de l'autre, d'une part, de pousser lesdits moyens d'encliquetage (24 ; 74) de la plaque (20 ; 70) vers les moyens d'encliquetage (12 ; 52) complémentaires de l'élément de montage (10 ; 50 ; 60) de manière à les verrouiller ensemble, et, d'autre part, d'engendrer ledit effort de pression de la plaque (20 ; 70) sur l'élément de montage (10 ; 50 ; 60) pour comprimer ledit joint d'étanchéité (40).

9. Appareillage électrique (1) étanche selon la revendication précédente, **caractérisé en ce que** les moyens d'encliquetage de la plaque (20 ; 70) sont des griffes d'encliquetage (24 ; 74) présentant des extrémités (24B) orientées à 135 degrés adaptées à s'accrocher sur des nervures d'encliquetage (12 ; 52 ; 62) présentant une pente de réception (12A ;52A) de même inclinaison, et lesdites surfaces de contact (25 ; 75) des moyens d'encliquetage sont prévues au dos des griffes d'encliquetage (24 ; 74).

10. Appareillage électrique (1) étanche selon la revendication précédente, **caractérisé en ce que** lesdites surfaces de contact (35) des pattes (31) de l'enjoliveur (30) s'étendent parallèlement au corps droit (24A) des griffes d'encliquetage (24 ; 74) et lesdites surfaces de contact (25 ; 75) des griffes d'encliquetage (24 ; 74) sont inclinées par rapport audit corps droit (24A).

11. Appareillage électrique (1) étanche selon l'une des revendications précédentes, **caractérisé en ce que** ledit joint d'étanchéité (40) est rapporté ou surmoulé sur l'élément de montage (10 ; 50 ; 60).

12. Appareillage électrique (1) étanche selon l'une des revendications 1 à 10, **caractérisé en ce que** ledit joint d'étanchéité (40) est rapporté ou surmoulé sur la plaque (20 ; 70).

13. Appareillage électrique (1) étanche selon l'une des revendications précédentes, **caractérisé en ce que** la plaque (20 ; 70) et l'enjoliveur (30) sont chacun formés d'une seule pièce par moulage d'une matière plastique.

14. Appareillage électrique (1) étanche selon l'une des revendications précédentes, **caractérisé en ce que** l'élément de montage est une boîte (10) à rapporter en saillie sur une paroi.

15. Appareillage électrique (1) étanche selon l'une des revendications 1 à 13, **caractérisé en ce que** l'élément de montage est un support d'appareillage (50) pour le montage encastré du mécanisme d'appareillage à l'intérieur d'une boîte d'encastrement.

## Claims

1. Sealed electrical equipment (1) including a mounting element (10; 50; 60) for mounting at least one equipment mechanism, a cover (20, 30; 70) for putting on the front of said mounting element (10; 50; 60), and a peripheral sealing gasket (40) interposed between said cover (20, 30; 70) and said mounting element (10; 50; 60), the cover (20, 30; 70) comprising a plate (20; 70) in the form of a frame that carries snap-fastener means (24; 74) adapted to co-operate, in a manner that can be separated without tools, with complementary snap-fastening means (12; 52; 62) of said mounting element (10; 50; 60), the equipment being **characterized in that** the cover (20, 30; 70) includes at least two distinct parts, including at least one trim (30) defining the function of said sealed electrical equipment (1) for fitting in each opening (21) defined internally by said plate (20; 70), each trim (30) including tabs (31) suitable for inserting between said snap-fastener means (24; 74) of the plate (20; 70) and a portion (13B; 53A; 63) of said mounting element (10; 50; 60) firstly to lock said snap-fastener means (24) of the plate (20; 70) on the complementary snap-fastener means (12; 52; 62) of the mounting element (10; 50; 60), and secondly to generate a pressure force from the plate (20; 70) against the mounting element (10; 50; 60), thereby compressing said sealing gasket (40).

2. Sealed electrical equipment (1) according to the preceding claim, **characterized in that** each trim (30) carries locking means (32) on its side or its front face for co-operating with the plate (20; 70) in order to lock the trim (30) on the plate (20; 70).

3. Sealed electrical equipment (1) according to the preceding claim, **characterized in that** the locking means include quarter-turn keys (32) having heads (33) that are accessible from the front face of the trim (30) and having key-bits (34) that are adapted to project from the side faces of the trim (30) to engage in side housings (23) in the plate (20; 70) and bear thereagainst.

4. Sealed electrical equipment (1) according to any preceding claim, **characterized in that** it includes at least one other peripheral sealing gasket (41) interposed between each trim (30) and said plate (20; 70).

5. Sealed electrical equipment (1) according to either one of the two preceding claims, **characterized in that** the position and the shape of the housings (23) in the plate (20; 70) are adjusted in such a manner that the housings (23) are adapted to receive the key-bits (34) of the quarter-turn keys (32) of each trim (30) in sealed manner so that said key-bits (34) generate another pressure force from the trim (30) on the plate (20; 70), thereby compressing said other sealing gasket (41).

6. Sealed electrical equipment (1) according to any one of the two preceding claims, **characterized in that** the plate (20; 70) includes a peripheral groove (22) internally adjacent to each opening (21) and receiving each other sealing gasket (41).

7. Sealed electrical equipment (1) according to any one of the three preceding claims, **characterized in that** each other sealing gasket (41) is fitted on or overmolded on the corresponding trim (30).

8. Sealed electrical equipment (1) according to any preceding claim, **characterized in that** the tabs (31) of the trim (30) and the snap-fastener means (24) of the plate (20; 70) present contact surfaces (35, 25; 75) that are inclined relative to one another making it possible, when they come into contact with each other, firstly to push said snap-fastener means (24; 74) of the plate (20; 70) towards the complementary snap-fastener means (12; 52) of the mounting element (10; 50; 60) in such a manner as to lock them together, and secondly to generate said pressure force from the plate (20; 70) against the mounting element (10; 50; 60) in order to compress said sealing gasket (40).

9. Sealed electrical equipment (1) according to the preceding claim, **characterized in that** the snap-fastener means of the plate (20; 70) are snap-fastener claws (24; 74) presenting ends (24B) oriented at 135 degrees and adapted to catch on snap-fastener ribs (12; 52; 62) presenting reception slopes (12A; 52A) having the same inclination, and said contact surfaces (25; 75) of the snap-fastener means are provided on the backs of the snap-fastener claws (24; 74).

10. Sealed electrical equipment (1) according to the preceding claim, **characterized in that** said contact surfaces (35) of the tabs (31) of the trim (30) extend parallel to the straight bodies (24A) of the snap-fastener claws (24; 74), and said contact surfaces (25; 75) of the snap-fastener claws (24; 74) are inclined relative to said straight bodies (24A).

11. Sealed electrical equipment (1) according to any preceding claim, **characterized in that** said sealing gasket (40) is fitted on or overmolded on the mounting element (10; 50; 60).

12. Sealed electrical equipment (1) according to any one of claims 1 to 10, **characterized in that** said sealing gasket (40) is fitted on or overmolded on the plate (20; 70).

13. Sealed electrical equipment (1) according to any preceding claim, **characterized in that** the plate (20; 70)
and the trim (30) are each formed as one-piece moldings of plastics material.

14. Sealed electrical equipment (1) according to any preceding claim, **characterized in that** the mounting element is a box (10) for surface mounting on a wall.

15. Sealed electrical equipment (1) according to any one of claims 1 to 13, **characterized in that** the mounting element is an equipment support (50) for flush-mounting the equipment mechanism inside a flush-mounted box.

## Patentansprüche

1. Abgedichtetes elektrisches Gerät (1) mit einem Montageelement (10; 50; 60) für mindestens einen Gerätemechanismus, einem an der Vorderseite des Montageelements (10; 50; 60) anzubringenden Deckel (20; 30; 70) und mit einem peripheren Dichtungselement (40), das zwischen dem Deckel (20; 30, 70) und dem Montageelement (10; 50; 60) eingesetzt wird, wobei der Deckel (20; 30; 70) in Form eines Rahmens, der Einklipsmittel (24; 74) aufweist, eine Platte (20; 70) umfasst und die Einklipsmittel sich dazu eignen, ohne Werkzeug demontierbar mit komplementären Einklipsmitteln (12; 52; 62) des Montageelements (10; 50; 60) zusammenzuwirken, **dadurch gekennzeichnet, dass** der Deckel (20; 30; 70) mindestens zwei verschiedene Teile umfasst, darunter mindestens eine Blende (30), die die Funktion des abgedichteten elektrischen Geräts (1) definiert, die von der Platte (20; 70) innen abgegrenzt in jede Öffnung (21) einzusetzen ist, wobei jede Blende (30) Laschen (31) umfasst, die sich zwischen den Einklipsmitteln (24; 74) der Platte (20; 70) und einem Teil (13B: 53A; 63) des Montageelements (10; 50; 60) einfügen lassen, um einerseits die Einklipsmittel (24) der Platte (20, 70) auf den komplementären Einklipsmitteln (12; 52; 62) des Montageelements (10; 50; 60) zu verriegeln und andererseits auf dem Montageelement (10; 50; 60) eine Druckkraft der Platte (20; 70) zu erzeugen, die das Dichtungselement (40) zusammendrückt.

2. Abgedichtetes elektrisches Gerät (1) nach vorausgehendem Anspruch, **dadurch gekennzeichnet, dass** jede Blende (30) seitlich oder an der Vorderseite Verriegelungsmittel (32) trägt, die mit der Platte (20; 70) zusammenwirken, um die Blende (30) auf der Platte (20; 70) zu verriegeln.

3. Abgedichtetes elektrisches Gerät (1) nach vorausgehendem Anspruch, **dadurch gekennzeichnet, dass** die Verriegelungsmittel Vierteldrehschlüssel (32) umfassen, deren Köpfe (33) auf der Vorderseite der Blende (30) zugänglich sind und deren Schlüsselbärte (34) geeignet sind, von den lateralen Seiten der Blende (30) hervorzustehen, um in die seitlichen Aufnahmen (23) der Platte (20; 70) einzugreifen und auf der Platte aufzuliegen

4. Abgedichtetes elektrisches Gerät (1) nach einem der vorausgehenden Ansprüche, **dadurch gekennzeichnet, dass** es mindestens ein weiteres peripheres Dichtungselement (41) umfasst, das zwischen jeder Blende (30) und der Platte (20; 70) eingesetzt wird.

5. Abgedichtetes elektrisches Gerät (1) nach den zwei vorausgehenden Ansprüchen, **dadurch gekennzeichnet, dass** die Position und die Form der Aufnahmen (23) in der Platte (20; 70) derart justiert sind, dass sich diese Aufnahmen (23) dazu eignen, in völlig dichter Weise die Schlüsselbärte (34) der Vierteldrehschlüssel (32) jeder Blende (30) aufzunehmen, damit die Schlüsselbärte (34) eine weitere Druckkraft der Blende (30) auf der Platte (20; 70) erzeugen, die das andere Dichtungselement (41) zusammendrückt.

6. Abgedichtetes elektrisches Gerät (1) nach einem der zwei vorausgehenden Ansprüche, **dadurch gekennzeichnet, dass** die Platte (20; 70) am Rand eine Vertiefung (22) aufweist, die jede Öffnung (21) innen einfasst und jeweils das andere Dichtungselement (41) aufnimmt.

7. Abgedichtetes elektrisches Gerät (1) nach einem der drei vorausgehenden Ansprüche, **dadurch gekennzeichnet, dass** jedes andere Dichtungselement (41) auf die entsprechende Blende (30) aufgesetzt oder aufgegossen wird.

8. Abgedichtetes elektrisches Gerät (1) nach einem der vorausgehenden Ansprüche, **dadurch gekennzeichnet, dass** die Laschen (31) der Blende (30) und die Einklipsmittel (24) der Platte (20; 70) jeweils zueinander geneigte Kontaktflächen (35; 25; 75) aufweisen, die, wenn sie sich berühren, zum einen ermöglichen, die Einklipsmittel (24; 74) der Platte (20; 70) so in Richtung der komplementären Einklipsmittel (12; 52) des Montageelements (10; 50; 60) zu drücken, dass sie miteinander verriegelt werden, und zum anderen ermöglichen, die Druckkraft der Platte (20; 70) auf das Montageelement (10; 50; 60) zu erzeugen, um das Dichtungselement (40) zusammenzudrücken.

9. Abgedichtetes elektrisches Gerät (1) nach vorausgehendem Anspruch, **dadurch gekennzeichnet, dass** die Einklipsmittel der Platte (20; 70) Einklipskrallen (24; 74) mit Enden (24B) sind, die um 135 Grad orientiert sind und sich dazu eignen, sich in den Einklipsrippen (12; 52; 62) einzuhängen, welche eine Aufnahmeschräge (12A; 52A) der gleichen Neigung aufweisen, und dass die Kontaktflächen (25; 75) der Einklipsmittel auf der Rückseite der Einklipskrallen (24; 74) vorgesehen sind.

10. Abgedichtetes elektrisches Gerät (1) nach vorausgehendem Anspruch, **dadurch gekennzeichnet, dass** sich die Kontaktflächen (35) der Laschen (31) der Blende (30) parallel zum geraden Körper (24A) der Einklipskrallen (24; 74) erstrecken und die Kontaktflächen (25; 75) der Einklipskrallen (24; 74) in Bezug auf den geraden Körper (24A) geneigt sind.

11. Abgedichtetes elektrisches Gerät (1) nach einem der vorausgehenden Ansprüche, **dadurch gekennzeichnet, dass** das Dichtungselement (40) auf das Montagelement (10; 50; 60) aufgesetzt oder aufgegossen wird.

12. Abgedichtetes elektrisches Gerät (1) nach einem der Ansprüche 1 bis 10, **dadurch gekennzeichnet, dass** das Dichtungselement (40) auf die Platte (20; 70) aufgesetzt oder aufgegossen wird.

13. Abgedichtetes elektrisches Gerät (1) nach einem der vorausgehenden Ansprüche, **dadurch gekennzeichnet, dass** die Platte (20; 70) und die Blende (30) jeweils aus einem einzigen Stück durch Formguss eines Kunststoffes geformt sind.

14. Abgedichtetes elektrisches Gerät (1) nach einem der vorausgehenden Ansprüche, **dadurch gekennzeichnet, dass** das Montageelement ein an einer Wand aufzusetzendes und überstehendes Kästchen (10) ist.

15. Abgedichtetes elektrisches Gerät (1) nach einem der Ansprüche 1 bis 13, **dadurch gekennzeichnet, dass** das Montageelement eine Gerätehalterung (50) für die in die Wand eingelassene Montage des Gerätemechanismus in einer UP-Dose ist.
